(19) Europäisches Patentamt
European Patent Office
Office européen des brevets

(11) **EP 3 021 088 B1**

(12) **EUROPÄISCHE PATENTSCHRIFT**

(45) Veröffentlichungstag und Bekanntmachung des Hinweises auf die Patenterteilung:
**07.03.2018  Patentblatt 2018/10**

(51) Int Cl.:
*G01D 5/244* *(2006.01)*     *G01D 5/245* *(2006.01)*
*G01D 5/347* *(2006.01)*

(21) Anmeldenummer: **14192925.7**

(22) Anmeldetag: **12.11.2014**

(54) **Inkrementales Längenmesssystem und Verfahren zu seinem Betrieb**

Incremental length measuring system and method of operating the same

Système de mesure de longueur incrémental et son procédé de fonctionnement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.05.2016  Patentblatt 2016/20**

(73) Patentinhaber: **Balluff GmbH**
**73765 Neuhausen a.d.F. (DE)**

(72) Erfinder: **Ruopp, Julian**
**74354 Besigheim (DE)**

(74) Vertreter: **Jakelski & Althoff**
**Patentanwälte PartG mbB**
**Patentanwälte**
**Partnerschaftsgesellschaft**
**Mollenbachstraße 37**
**71229 Leonberg (DE)**

(56) Entgegenhaltungen:
**EP-A2- 1 400 778**     **DE-A1-102008 053 985**
**DE-A1-102008 053 986**     **DE-U1- 20 302 273**

## Beschreibung

Die Erfindung geht aus von einem inkrementalen Längenmesssystem mit einem vorzugsweise magnetisch kodierten, eine Inkrementalspur sowie wenigstens eine Absolutspur aufweisenden Maßkörper sowie von einem Verfahren zum Betrieb eines solchen Längenmesssystems, nach der Gattung der jeweiligen unabhängigen Ansprüche.

## Stand der Technik

Auf dem Gebiet der Messtechnik sind Magnetband-Längenmesssysteme (BML) bekannt geworden, bei denen ein Sensorkopf über einen mit wechselnder Polarität magnetisierten Maßkörper bewegt wird. Durch die Bewegung wird in dem Sensorkopf bzw. in dem Magnetfeldsensor im Idealfall ein sinusförmiges Sensorsignal erzeugt. Je nach magnetischem Messprinzip wiederholt sich der Signalverlauf im Sensorkopf mit jedem Pol des Maßkörpers (z.B. bei GMR- oder AMR-Sensoren, welche das Quadrat der magnetischen Flussdichte $B^2$ messen) oder mit jedem Polpaar des Maßkörpers (z.B. bei Hall-Sensoren, welche eine Ausgangsspannung liefern, die proportional zum Produkt aus magnetischer Feldstärke und Strom ist). Die Positionsbestimmung erfolgt in an sich bekannter Weise, z.B. mittels trigonometrischer Funktionen.

An einem genannten Maßkörper gibt es mehrere Spuren. Dabei bewegt sich ein als Inkrementalsensor ausgebildeter Sensorkopf relativ zu einer sogenannten Inkrementalspur, welche für eine inkrementale Positionsbestimmung genutzt wird. Die Inkremental-Position gibt die Position des Sensors bzw. Sensorkopfes innerhalb eines Poles an bzw. zurück.

Für ein absolutes Längenmesssystem ist es häufig erforderlich, den Messbereich zu erweitern. Dies geschieht bekanntermaßen über weitere Spuren, und zwar meist über eine sogenannte Pseudo-Random-kodierte (PRC) "Absolutspur", aus welcher sich nach deren Digitalisierung die Position des Sensors innerhalb eines Messbereichs, welcher mehrere Pole umfasst, berechnen lässt.

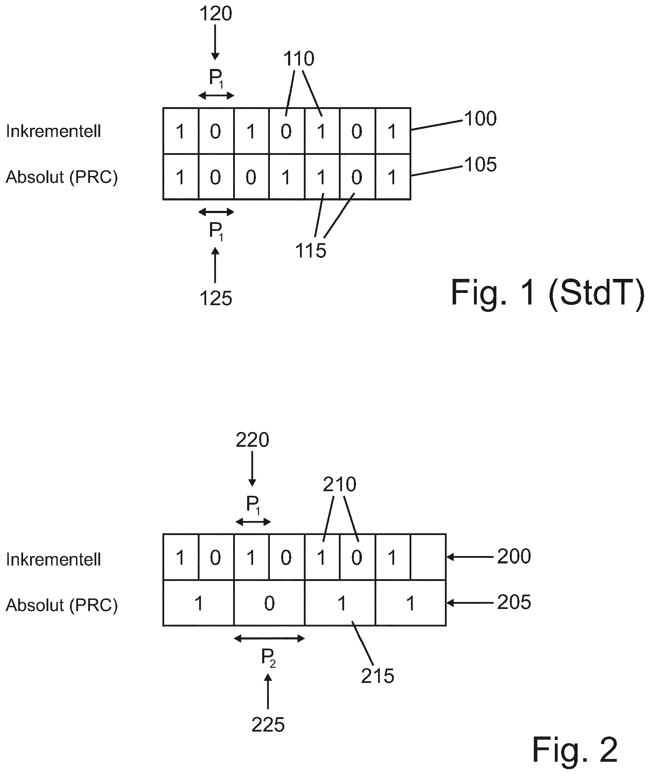

Bei einem genannten absoluten Messsystem müssen die durch eine genannte Absolutspur bereitgestellten logischen Bits die gleiche Periodenlänge wie die Teilung der Inkrementalspur haben (Fig. 1). Vor allem im Bereich magnetischer Messsysteme sind die minimale Polbreite der Absolutspur, d.h. die äquivalente Bitlänge bzw. Periodenlänge über den Weg, und somit auch die minimale Polbreite der Inkrementalspur, nach unten hin begrenzt.

Aus DE 10 2008 053 986 A1 und DE 10 2008 053 985 A1 geht eine Winkelmessvorrichtung mit einem zumindest lokal im Wesentlichen linearen Maßkörper hervor, wobei der Maßkörper eine konzentrisch innenliegende Inkrementalspur aufweist. Diese Vorrichtung umfasst zudem magnetische und induktive Abtastprinzipien von dort beschriebenen Codeelementen, welche funktionell den Polen einer Absolutspur entsprechen, wobei die Polbreite der Absolutspur gegenüber der Polbreite einer Inkrementalspur vervielfacht ausgebildet ist.

## Offenbarung der Erfindung

Der Erfindung liegt die Aufgabe zugrunde, ein hier betroffenes Längenmesssystem bzw. ein Verfahren zu seinem Betrieb anzugeben, mit denen die genannten Nachteile des Standes der Technik bei möglichst geringen Herstellungskosten und/oder möglichst geringen Betriebskosten behoben werden.

Der Erfindung liegt der Gedanke zugrunde, bei einem hier betroffenen Längenmesssystem einen Maßkörper vorzusehen, bei dem wenigstens eine zweite Absolutspur angeordnet ist, wobei die Polbreite der wenigstens zweiten Absolutspur, und damit auch die Bitlänge der Absolutspur, gegenüber der Polbreite der ersten Absolutspur vervielfacht, insbesondere verdoppelt, ausgebildet ist.

Durch die genannte Vervielfachung der Polbreite der wenigstens zweiten Absolutspur lassen sich Linearitätsabweichungen und Positionierungstoleranzen erheblich reduzieren. Auch werden negative Einflüsse des zwischen dem Sensor bzw. Sensorkopf und dem Maßkörper angeordneten Luftspalts auf die Schalteigenschaften der verwendeten Digitalsensoren verringert.

Darüber hinaus wird eine fehlerfreie Erkennung der Absolutposition auch während eines Einfahrvorganges des Sensorkopfes in den Maßkörper ermöglicht. Denn bei diesem Vorgang muss sicher erkannt werden, ab wann ein gültiger PRC-Code (Pseudo-Randomkodierter Code) an den Absolut-Sensoren anliegt.

Zusätzlich können eine dritte Spur oder ggf. noch weitere Spuren mit einer weiteren Verdoppelung der Polbreite gegenüber der jeweils vorhergehenden Spur implementiert werden. Dadurch lassen sich die hierin beschriebenen vorteilhaften Effekte der Polverbreiterung weiter verbessern bzw. verstärken.

Ferner können die genannten Sensoren in Bezug auf den Abstand zwischen ihren sensitiven Flächen um eine Viertelperiode der magnetischen Periode eines Pols angeordnet sein, wobei eine magnetische Periode der doppelten magnetischen Polbreite entsprechend dem Zusammenhang $P/4 = P_2/2$ entspricht.

Die Erfindung betrifft auch ein Verfahren zum Betrieb eines erfindungsgemäßen Längenmesssystems, welches insbesondere eine fehlerfreie Erkennung einer Absolutposition während eines Einfahrvorganges des Sensors in bzw.

an den Maßkörper ermöglicht. Das erfindungsgemäße Verfahren sieht dazu insbesondere vor, dass die wenigstens eine eine gegenüber der Polbreite der Inkrementalspur vervielfacht ausgebildete Polbreite aufweisende Absolutspur mit einem Pseudo-Random-Code (PRC) kodiert ist und mittels einer PRC-Auswertung ausgewertet wird, wobei ein zusätzliches Inkrement, entsprechend der geänderten Polbreite der Absolutspur hinzuaddiert wird. Ein Hinzuaddieren eines zusätzlichen Inkrements kann dabei je nach Position eines umpositionierten, höchstwertigen Bits erfolgen.

Bei dem erfindungsgemäßen Verfahren kann ferner vorgesehen sein, dass die PRC-Auswertung anhand der folgenden Gleichung $f_{Position,ALT} = f$ (ABit$_0$, ABit$_1$, ABit$_2$, ..., ABit$_{n-1}$, ABit$_n$) * Bit_Breite erfolgt, wobei n gleich der Anzahl der Bits ist und wobei die Position $f_{Position,ALT}$ in an sich bekannter Weise ermittelt wird. Die Auswertung des PRC erfolgt dabei mittels eines an sich bekannten Fibonacci-Feedback-Generators, bei dem von den Absolutsensoren erfasste Bits (ABit$_x$) über eine XOR-Verknüpfung ein nächstes n-Tupel ergeben. Die genaue Position des Sensors lässt sich erfindungsgemäß anhand der Gleichung $f_{Position,NEU} = f$ (2 * $f_{Position,ALT}$ + ABit$_n$) * Bit_Breite berechnen, in der das ABit$_n$ einen logischen Wert aus dem Wertebereich [0, 1] annehmen kann. Dieses Auswerteverfahren entspricht in vorteilhafter Weise einer Einbeziehung einer zu der PRC-Spur zusätzlichen Spur zur Bestimmung einer Absolutposition.

Bei dem erfindungsgemäßen Verfahren kann im Falle eines Längen- bzw. Positionsmesssystems mit x zusätzlichen Absolutspuren, bei dem sich eine Ver-n-fachung der Polbreite mit n= $2^x$ ergibt, und welches 0° sowie 90° erfassende Sensoren aufweist, vorgesehen sein, dass den 0° und 90° erfassenden Sensoren das Vielfache einer Periode zum eigentlichen Positionierungsabstand gemäß dem Zusammenhang P/4 = $2^x$ * P + P/4, wobei P = magnetische Periode und x = 0, 1, 2, 3, ... hinzugefügt wird. Mit dieser Vorgehensweise können in vorteilhafter Weise beliebig viele weitere Spuren ergänzt werden, wobei x Zusatzspuren einer Vervielfachung bzw. Ver-n-fachung der PRC-Polbreite mit n= $2^x$ ergeben. Der Vorteil einer solchen Anordnung liegt in der dadurch gebildeten Periodizität bei der Inkrementalspur und den Hilfsspuren. Diese Periodizität ermöglicht es, den 0°- und 90°-Sensoren das Vielfache einer Periode zum eigentlichen Positionierungsabstand hinzuzufügen.

Ferner kann bei dem erfindungsgemäßen Verfahren vorgesehen sein, dass beim Einfahren wenigstens eines einer Absolutspur zugeordneten Sensors in den Maßkörper das Vorliegen eines gültigen PRC-Codes erkannt wird. Im Zusammenhang mit der erfindungsgemäß vorgeschlagenen Polvervielfachung einer Absolutspur kann dadurch erreicht werden, dass ein Einfahren des Sensorkopfes (Gebers) an den bzw. in den Maßkörper mit gegenüber dem Stand der Technik erhöhter Sicherheit erkannt werden kann.

Die Erfindung lässt sich nicht nur bei magnetischen Messsystemen, sondern auch bei optischen, kapazitiven, induktiven oder sonstigen Mess- bzw. Wirkprinzipien entsprechend anwenden, soweit der jeweilige Sensor bzw. Sensorkopf eine endliche Ausdehnung bzw. Größe in Polrichtung besitzt.

## Kurzbeschreibung der Figuren

Fig. 1    zeigt schematisch einen Maßkörper eines hier betroffenen Längenmesssystems, gemäß dem Stand der Technik.

Fig. 2    zeigt schematisch einen erfindungsgemäß ausgebildeten Maßkörper eines hier betroffenen Längenmesssystems.

Fig. 3    zeigt schematisch eine Sensoranordnung eines hier betroffenen Längenmesssystems, gemäß dem Stand der Technik.

Fig. 4    zeigt schematisch eine erfindungsgemäß ausgebildete Sensoranordnung eines hier betroffenen Längenmesssystems.

Fig. 5    zeigt schematisch einen erfindungsgemäß mit einer dritten Spur bzw. einer zweiten Absolutspur ausgebildeten Maßkörper eines hier betroffenen Längenmesssystems.

Fig. 6    zeigt schematisch einen erfindungsgemäß ausgebildeten Maßkörper zur Illustration des erfindungsgemäßen Verfahrens zum Einfahren eines Sensorkopfs an den bzw. in den Maßkörper.

## Detaillierte Beschreibung der Ausführungsbeispiele

In der Fig. 1 ist schematisch ein an sich bekannter linearer Maßkörper eines hier betroffenen Magnetband-Längenmesssystem (BML) mit einer Inkrementalspur 100 und einer mit der Inkrementalspur 100 fest bzw. ortsfest verbundenen Pseudo-Random Coded- (PRC-) Absolutspur 105 dargestellt. Die Inkrementalspur 100 weist binär kodierte Pole 110 und die Absolutspur 105 ebenfalls binär kodierte Pole 115 auf. Sowohl die Absolutspur 105 als auch die Inkrementalspur 100 weisen eine jeweils übereinstimmende Polbreite ‚P1' 120, 125 auf.

Neben an sich bekannten Anwendungsszenarien mit einer im Wesentlichen linearen Messstrecke kann ein solcher Maßkörper 100, 105 auch auf dem Umfang einer nicht gezeigten Antriebswelle eines Windkraftwerks oder dergleichen angeordnet sein. Das BML dient dabei zur Überwachung bzw. Wartung des Windkraftwerks, wobei die Position der Antriebswelle eindeutig erfasst werden muss.

In Fig. 2 ist ein erfindungsgemäß modifizierter linearer Maßkörper 200, 205 mit binär kodierten Polen 210 einer Inkrementalspur 200 sowie binär kodierten Polen 215 einer genannten Absolutspur (PRC) 205 dargestellt, bei dem die Absolutspur 205 eine gegenüber der einfachen Polbreite ,P1' 220 der Inkrementalspur 200 verdoppelte Polbreite ,P2' 225 aufweist. Hierbei wird sich insbesondere zunutze gemacht, dass Inkremental-Sensoren deutlich genauer als Absolutspur-Sensoren messen, was demnach der vorgeschlagenen Polbreitenverdopplung der Absolutspur 205 gegenüber der Inkrementalspur 200 entgegenkommt.

Aufgrund der gegenüber der Absolutspur alternierenden Polpaare der Inkrementalspur können nunmehr auch Inkrement-Auswertesensoren, z.B. digitale Absolut-Sensoren, eingesetzt werden, wobei diese dann anstelle des Abstandes P/4 zwischen ihren sensitiven Flächen um eine Viertel-Periode der Inkrementalspur ($P = 2 * P_1$), d.h. um 5*(P/4), versetzt sein können.

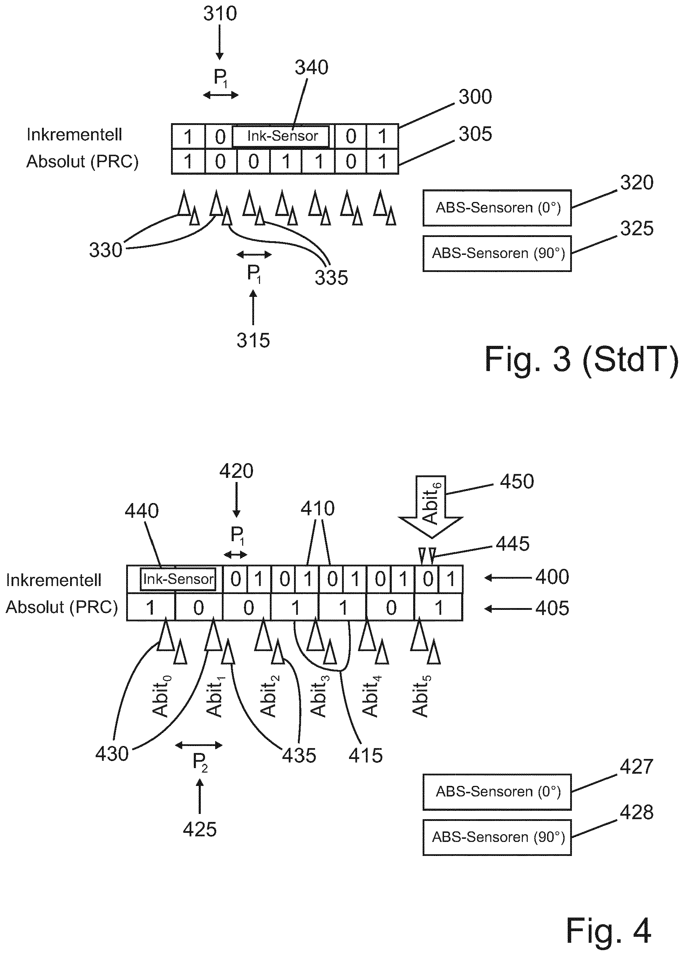

Eine solche Anordnung ermöglicht die Verwendung von gegenüber dem Stand der Technik deutlich größeren Baueinheiten ("Packages"). Denn die Absolutspur-Sensoren können bei einer erfindungsgemäßen Anordnung der Pole mit einem Abstand P/4 (vgl. Fig. 3 Bezugszeichen 320 und 325) an der bzw. auf die Absolutspur 205, 305 aufgebracht werden. Bei einer erfindungsgemäßen Polbreitenverdopplung verdoppelt sich auch die Polbreite der Absolutsensoren (vgl. Fig. 4, Bezugszeichen 427 und 428) der PRC-Spur 405. Dadurch können größere Sensorpackages verwendet werden.

Zudem verbessern sich die Schalteigenschaften einzelner digitaler Spur-Sensoren, die sich unter Umständen kritisch auf den Arbeits-Luftspalt auswirken, und zwar insbesondere proportional mit der Vervielfachung der Polbreite der Absolutspur.

Darüber hinaus kann mittels der vorgeschlagenen Polvervielfachung erreicht werden, dass ein Einfahren des Sensorkopfes (Gebers) an den bzw. in den Maßkörper mit gegenüber dem Stand der Technik erhöhter Sicherheit dadurch erkannt werden kann, dass ein gültiger PRC-Code mittels Absolutsensoren mit mindestens einem 0°- und einem 90°-Sensor ermittelt wird.

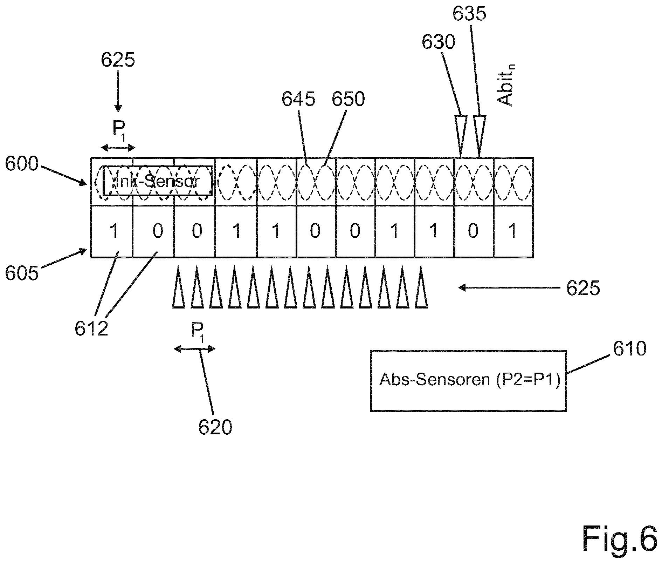

Wie in Fig. 6 dargestellt, ermöglicht die Erfindung ein Einfahren eines hier betroffenen Sensorkopfs eines Absolutsensors 610 in einen bzw. an einen hier betroffenen Maßkörper mit einer Inkrementalspur 600 und einer Absolutspur (PRC) 605 in den beiden folgenden Betriebsmodi. Die Absolutspur 605 weist wiederum Pole bzw. Polpaare 612 auf, wobei die Polbreiten der Inkrementalspur 600 mit den Polbreiten der Absolutspur 605 übereinstimmen (mit dem Wert "P1" 615, 620).

a) Vorwärtsgerichtetes Einfahren: Aufgrund der Periodizität der Inkremental-Spur muss einer der genannten Absolutsensoren, d.h. der 0°-Sensor 630 oder der 90°-Sensor 635 (hier bipolar, Abit_n), ein gültiges Magnetfeld erkennen, wobei die Feldstärke des Magnetfeldes gemäß den Anforderungen der jeweiligen Sensorauswertung vorzugeben ist. Die gezeigten Sinus- und Cosinus-Signale 645, 650 entsprechen von einem MR-Inkrementalsensor ausgegebenen Analog-Signalen, d.h. in dem Ausführungsbeispiel mittels magneto-resistiver Inkrementalsensoren mit einer Periodizität von P1 erfassten Signalen, wie nachfolgend noch im Detail beschrieben wird.

b) Rückwärtsgerichtetes Einfahren: Durch eine dabei durchgeführte Amplitudenüberwachung des ebenfalls gezeigten Inkrementalsensors ("Ink-Sensor") kann ein nicht vorhandener Maßkörper erkannt werden

Zu Fig. 6 ist ferner anzumerken, dass - alternativ zu zwei im Abstand P/4 angeordneten bipolaren Absolutsensoren 625 - auch drei (hier nicht gezeigte) unidirektionale Absolutsensoren angeordnet bzw. vorgesehen sein können. Es ist hierbei anzumerken, dass jeder der in Fig. 6 gezeigten Pfeile 625 einem Absolutsensor entspricht, wobei in der vorliegenden Darstellung nicht zwischen 0°-Sensor-Reihe und 90° Sensor-Reihe unterschieden wird. Falls der Inkrementalsensor ("Ink-Sensor") dabei gegenüber den Absolutsensoren 625 mittig angeordnet ist, kann das vorwärtsgerichtete Einfahren auch über weitere, an der Inkrementalspur angeordnete Absolutsensoren implementiert werden, und zwar entsprechend dem genannten rückwärtsgerichteten Einfahren.

Fig. 3 zeigt einen an sich bekannten Sensoraufbau eines hier betroffenen Längenmesssystems. Dabei wird die Inkrementalspur 300 mittels eines einzelnen Inkrementalsensors 340 eingelesen bzw. ausgelesen, wohingegen die Absolutspur 305, wie eben beschrieben, mittels zweier Absolutsensor-Reihe 330, 335, und zwar einem 0°-Grad-Sensorreihe 320 und einem 90°-Grad-Sensorarray 325 eingelesen wird. Sowohl die Inkrementalspur 300 als auch die Absolutspur 305 weisen, gemäß dem Stand der Technik, übereinstimmende Polbreiten 310, 315 auf. Um dabei zu jeder Position einen korrekten digitalen Wert einlesen zu können, wird mittels der beiden Absolutsensor-Reihen (0° und 90°-Absolutsensorarray) 320, 325 jeweils eine Bit-Folge (der jeweiligen gültigen Absolutsensor-Reihe entsprechend des PRC-Codes ausgewertet) der Absolutspur 305 abgebildet. Hierbei wird immer die Reihe der Absolutsensoren (0° oder 90°) verwendet, welche momentan in einem ihr gegenüber gültigen Arbeitsbereich steht, und somit aufgrund eines Polwechsels oder undefinierten Zustandes keinen gültigen Digitalwert bereitstellt.

Es ist anzumerken, dass sich die in Fig. 3 gezeigten beispielhaften Absolutsensoren "325" auf Polübergängen zwischen den Polen (1. Polwechsel von Links: 1->0, entsprechend Polaritätswechsel) befinden. In diesem Fall würde die Absolut-Sensor-Reihe "320" eingesetzt, da diese in Ihrer Position ideal (in Mitten des Poles, also der Maximalen Feldstärke) des magnetisch kodierten Binärwertes steht.

Die Fig. 4 zeigt eine gegenüber der Fig. 3 erfindungsgemäß modifizierte Sensoranordnung eines hier betroffenen Längenmesssystems. Der gezeigte Maßkörper 400, 405 umfasst wiederum eine von einem einzelnen Inkrementalsensor 440 ausgelesene Inkrementalspur 400 mit binär kodierten Polen 410 sowie eine Absolutspur (PRC) 405 mit binär kodierten Polen 415, wobei die Polbreite "P2" 425 der Absolutspur 405 gegenüber der Polbreite "P1" 420 der Inkrementalspur 400 verdoppelt ist. Die Absolutspur 405 wird wiederum mittels zweier Absolutsensor-Reihen (beispielhaft) 430, 435, und zwar wiederum eine 0°-Sensor-Reihe 427 und einer 90°-Sensor-Reihe 428 eingelesen bzw. ausgelesen, wobei sich entsprechend den Polen 415 der Absolutspur 405 folgende (logischen) Bits ergeben: $ABit_0$, $ABit_1$, ..., $ABit_5$.

Es ist anzumerken, dass die Polnummern bei der Verwendung einer Polbreitenverdopplung einer PRC-Spur nicht mehr die benötigte Auflösung von $\lambda$ haben, sondern $2 * \lambda$. Daher wird diese fehlende Information über die Benutzung der beiden genannten zusätzlichen Absolut-Sensoren 445 auf der Inkrementalspur 400 erzeugt.

Es ist ferner anzumerken, dass in dem Ausführungsbeispiel gemäß Fig. 4 die höchstwertigen Absolutsensoren 445, d.h. vorliegend das $ABit_6$ 450, an der Inkrementalspur 400 angeordnet sind. Über die Absolut-Positions-Berechnung auf der Absolutspur 405 kann prinzipiell nur auf eine Position der Genauigkeit P2 "425" geschlossen werden. Der Inkrementalsensor kann jedoch nur innerhalb eines Poles der Größe P1 "420" die "geforderte "genaue" Position interpolieren. Daher ist es notwendig, die Genauigkeit der Spur 405 um einen Faktor 2 zu erhöhen. Dies geschieht mit Hilfe der genannten Absolutsensoren "445", welche eine Unterscheidung zwischen Nord- und Südpolen ermöglichen.

Die genannten Zusammenhänge sollen an dem folgenden Beispiel verdeutlicht werden:

a) Die Auswertung des PRC-Codes der Absolutspur 405 ergibt eine eindeutige Position innerhalb des Maßkörpers mit einer Genauigkeit von P2 425.

b) Die zusätzliche Unterscheidung zwischen Nord- und Süd-Pol der Inkrementalspur 400 ergibt, unter Zuhilfenahme von a), eine Genauigkeit von P1 420.

c) Durch Interpolation der Einzelpole auf der Inkrementalspur 400 und aufgrund deren hochgenauer absoluter Auflösung innerhalb eines Pols von P1 420 kann, zusammen mit den Schritten (a) und (b), eine sehr hohe Absolutgenauigkeit über den gesamten vom PRC-Code abgedeckten Wertebereich (d.h. Abit0...Abit5, "430" und Absolutsensor 435) ermittelt werden.

Bei einem Maßkörper ohne die erfindungsgemäße Polbreiten- bzw. Bitlängen-Verdopplung erfolgt die Auswertung eines genannten Pseudo-Random-Codes (PRC's) in an sich bekannter Weise wie folgt. Da die Generierung eines PRC in an sich bekannter Weise auf z.B. einem "Fibonacci-Feedback-Generator" beruht, bei dem von den Absolutsensoren gemäß Fig. 4 erfasste Bits ($ABit_x$) über eine XOR-Verknüpfung ein nächstes n-Tupel ergeben, wobei n = Anzahl der Bits ist, lässt sich die Position $f_{Position,ALT}$ gemäß dem Stand der Technik (siehe Index "ALT") nach der folgenden Gleichung berechnen:

$$f_{Position,ALT} = f\ (ABit_0,\ ABit_1,\ ABit_2,\ \ldots,\ ABit_{n-1},\ ABit_n)\ *\ Bit\_Breite. \qquad (1)$$

Das nachfolgend beschriebene, erfindungsgemäß modifizierte Auswerteverfahren ermöglicht eine genannte Bit-Längen-Verdopplung. Dabei wird das Ergebnis der genannten an sich bekannten PRC-Auswertung verdoppelt, wobei ein zusätzliches Inkrement, entsprechend der geänderten Polbreite und je nach Position des nunmehr umpositionierten, höchstwertigen Bits (vorliegend das $ABit_n$) hinzuaddiert wird. Dies liegt wiederum an der oben genannten Unterscheidung zwischen Nord- und Südpol. Alternativ zu der genannten Unterscheidung kann hierbei die Wertigkeit der Inkrementalspur zugrundegelegt werden, womit die Genauigkeit des PRC-Codes um den Faktor 2 verbessert werden kann und wodurch ein Interpolator eingesetzt werden kann, der innerhalb von P1 420 eine Absolutposition ermittelt.

Die Position nach der erfindungsgemäß modifizierten Methode (siehe Index "NEU") lässt sich aus der folgenden Gleichung berechnen:

$$f_{Position,NEU} = f\ (2\ *\ f_{Position,ALT} + ABit_n)\ *\ Bit\_Breite, \qquad (2)$$

wobei das $ABit_n$ einen beliebigen Wert aus dem Wertebereich [0, 1] annehmen kann. Die Größe $f_{Position,ALT}$ entspricht einer Berechnung der Absolutposition mit der Auflösung P2 425 anhand des jeweils vorliegenden PRC_Codes. Die Größe $f_{Position,ALT}$ wird aufgrund der Polbreitenverdopplung (P2 = 2 * P1, wobei P1 = Bitbreite gemäß Bezugszeichen 420) mit dem Faktor 2 multipliziert. Die Größe $ABit_n$ ermöglicht die Unterscheidung, ob auf der Inkrementalspur ein Nord- oder Südpol vorliegt. Damit ist im Ergebnis die Auflösung von P1 erreicht.

Im Ergebnis bedeutet das Auswerteverfahren gemäß Gleichung (2) die Einbeziehung einer zu der PRC-Spur zusätzlichen Spur zur Gewinnung einer Absolutposition.

In dem hier gezeigten Ausführungsbeispiel werden magneto-resistive Inkrementalsensoren benutzt, welche keine Unterscheidung des Vorliegens eines Nordpols oder Südpols (1, 0) machen können. Daher kann die Inkrementalspur als die genannte "zusätzliche" Spur benutzt werden. Die Inkrementalspur liefert aufgrund ihrer in dem vorliegenden Ausführungsbeispiel mit magneto-resistiven Inkrementalsensoren erfolgenden Auswertung eine Absolutposition innerhalb der Periode P1 420. Der Bereich, in welchem eine eindeutige Positionsbestimmung möglich ist, kann durch die oben erwähnten $ABit_n$ (Absolutsensoren) auf der Inkrementalspur erreicht werden, mittels derer ausgewertet wird, ob ein Nord- oder ein Südpol vorliegt.

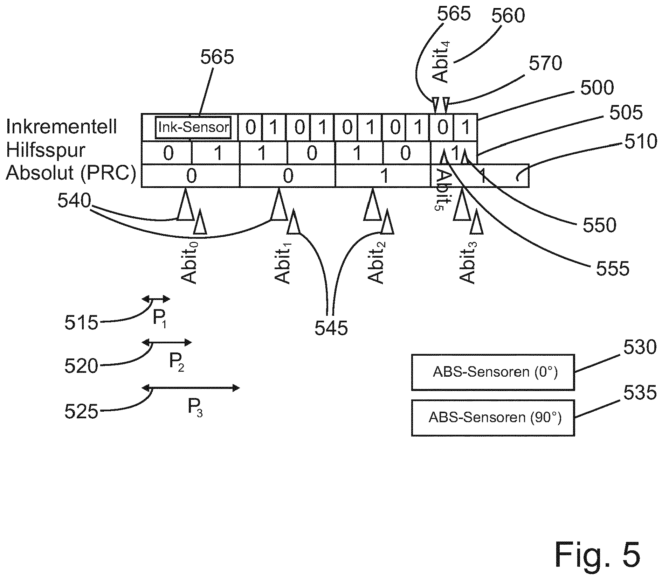

Das in Fig. 5 gezeigte Ausführungsbeispiel eines erfindungsgemäßen Maßkörpers 500, 505, 510 bzw. Längenmesssystems umfasst eine dritte Spur 510, mittels der eine weitere Verdoppelung gemäß "P3" 525 der Polbreite "P2" 520 der Absolutspur 505 herbeigeführt werden kann, wobei die Polbreite der Inkrementalspur 500 wiederum "P1" 515 beträgt.

Die Inkrementalspur 500 wird wiederum mittels eines einzelnen Inkrementsensors 565 bewerkstelligt, wohingegen die beiden Absolutspuren 505, 510 mittels 0°-Sensoren 530 und 90°-Sensoren 535 ein- bzw. ausgelesen werden. Um auch hier zu jeder Position, d.h. in der Fig. 5 in gezeigter waagerechter Richtung entlang der einzelnen Pole, einen korrekten digitalen Wert einlesen zu können, wird wiederum mittels der beiden Absolutsensoren 530, 535 jeweils ein einzelnes Bit der jeweiligen Absolutspur 505, 510 abgebildet. Im Falle der zweiten Absolutspur 510 sind dies die von den Absolutsensoren 540, 545 ein- bzw. ausgelesenen logischen bzw. binären Werte $ABit_0$, $ABit_1$, $ABit_2$ und $ABit_3$ und im Falle der ersten Absolutspur 505 die logischen bzw. binären Werte $ABit_5$ der höchstwertigen Absolutsensoren 550, 555. Im Falle der Inkrementalspur 500 sind dies die von den Absolutsensoren 656, 570 ein- bzw. ausgelesenen logischen bzw. binären Werte $ABit_4$.

Entsprechend können beliebig viele weitere Spuren ergänzt werden, wobei x Zusatzspuren einer Vervielfachung bzw. Ver-n-fachung der PRC-Polbreite mit $n = 2^x$ ergeben. Der Vorteil einer solchen Anordnung liegt in der dadurch gebildeten Periodizität bei der Inkrementalspur und den Hilfsspuren. Diese Periodizität ermöglicht es, den 0°- und 90°-Sensoren das Vielfache einer Periode zum eigentlichen Positionierungsabstand hinzuzufügen gemäß dem Zusammenhang (3):

$$P/4 = 2^x * P + P/4, \qquad\qquad (3)$$

wobei P = magnetische Periode; x = 0, 1, 2, 3, ....

Der beschriebene Maßkörper bzw. das beschriebene Längenmesssystem sowie das beschriebene Verfahren zu seinem Betrieb können bevorzugt in einem Magnetband-Längenmesssystem mit den hierin beschriebenen Vorteilen eingesetzt werden. Darüber hinaus kann die Vorrichtung und das das Verfahren jedoch prinzipiell bei allen rotatorischen und linearen Positionier-, Mess-, Verfahrgeschwindigkeits- oder Drehzahlüberwachungen angewendet werden. Zudem lässt sich das Verfahren nicht nur bei den hierin beschriebenen Magnetband-Längenmesssystemen bzw. magnetischen Messsystemen mit den genannten Vorteilen anwenden, sondern auch bei allen Arten von inkrementellen und auch absoluten Messsystemen, z.B. induktiven, optischen oder kapazitiven Messsystemen oder dergleichen. Bei den zuletzt genannten, nicht-magnetischen Messsystemen sind die hierin beschriebenen Konzepte und Prinzipien analog anwendbar.

## Patentansprüche

**1.** Längen- bzw. Positionsmesssystem, welches einen zumindest lokal im Wesentlichen linearen Maßkörper (200, 205) sowie wenigstens einen relativ zu dem Maßkörper (200, 205) zu verfahrenden Sensor (320, 325, 340) aufweist, wobei der Maßkörper (200, 205) eine Inkrementalspur (200) und wenigstens eine Absolutspur (205) umfasst, wobei die Inkrementalspur sowie die wenigstens eine Absolutspur (205) des Maßkörpers (200, 205) Pole (210, 215) mit einer in Längsrichtung des Maßkörpers (200, 205) vorgegebenen Polbreite (220) und mit Übergängen zwischen den Polen aufweisen, und wobei die Polbreite (225) der wenigstens einen Absolutspur (205) gegenüber der Polbreite (220) der Inkrementalspur (200) um einen Faktor $n = 2^x$, x = 0, 1, 2, 3, ..., vervielfacht ausgebildet ist und die Übergänge zwischen den Polen der wenigstens einen Absolutspur (205) in Längsrichtung des Maßkörpers (200, 205) mit Übergängen zwischen Polen der Inkrementalspur (200) zusammenfallen, **dadurch gekennzeichnet, dass** wenigstens eine zweite Absolutspur (510) angeordnet ist, wobei die Polbreite (525) der wenigstens zweiten Absolutspur (510) gegenüber der Polbreite (520) der ersten Absolutspur (505) um einen Faktor m=$2^y$, y = 1, 2, 3, ..., mit y = x+1 vervielfacht ausgebildet ist und die Übergänge zwischen den Polen der wenigstens zweiten Absolutspur (510) in Längsrichtung des Maßkörpers (200, 205) mit Übergängen zwischen Polen der Inkrementalspur (200) zusammenfallen.

2. Längen- bzw. Positionsmesssystem nach Anspruch 1, wobei die Polbreite (525) der wenigstens zweiten Absolutspur (510) gegenüber der Polbreite (520) der ersten Absolutspur (505) verdoppelt ausgebildet ist.

3. Längen- bzw. Positionsmesssystem nach Anspruch 1 oder 2, wobei wenigstens eine dritte Absolutspur angeordnet ist, wobei die Polbreite einer bestimmten Absolutspur gegenüber der Polbreite einer jeweils vorhergehenden Absolutspur vervielfacht, insbesondere verdoppelt, ausgebildet ist.

4. Längen- bzw. Positionsmesssystem nach einem der vorhergehenden Ansprüche, umfassend Sensoren, welche in Bezug auf den Abstand zwischen ihren sensitiven Flächen um eine Viertelperiode einer magnetischen Periode eines Pols angeordnet sind.

5. Verfahren zum Betrieb eines Längen- bzw. Positionsmesssystems gemäß einem der vorhergehenden Ansprüche, wobei die wenigstens eine eine gegenüber der Polbreite (220) der Inkrementalspur (200) vervielfacht ausgebildete Polbreite (225) aufweisende Absolutspur (205) mit einem Pseudo-Random-Code, das heißt PRC, kodiert ist und mittels einer PRC-Auswertung ausgewertet wird, wobei ein zusätzliches Inkrement, entsprechend der geänderten Polbreite (225) der Absolutspur (205) hinzuaddiert wird.

6. Verfahren nach Anspruch 5, wobei die PRC-Auswertung anhand der folgenden Gleichung (1) erfolgt:

$$f_{Position,ALT} = f (ABit_0, ABit_1, ABit_2, \ldots, ABit_{n-1}, ABit_n) * Bit\_Breite, \qquad (1)$$

wobei n gleich der Anzahl der Bits ist, und wobei die Position anhand der folgenden Gleichung (2) berechnet wird:

$$f_{Position,NEU} = f (2 * f_{Position,ALT} + ABit_n) * Bit\_Breite, \qquad (2)$$

wobei das $ABit_n$ einen logischen Wert aus dem Wertebereich [0, 1] annehmen kann

7. Verfahren nach Anspruch 5 oder 6 bei einem als Winkelmesssystem ausgebildeten Längen- bzw. Positionsmesssystem mit x zusätzlichen Absolutspuren, wodurch sich eine Ver-n-fachung der Polbreite mit n= $2^x$ ergibt, und mit 0° sowie 90° erfassenden Sensoren, wobei den 0° und 90° erfassenden Sensoren das Vielfache einer Periode zum eigentlichen Positionierungsabstand hinzugefügt wird gemäß der folgenden Gleichung (3):

$$P/4 = 2^x * P + P/4, \qquad (3)$$

wobei P = magnetische Periode und x = 0, 1, 2, 3, ....

8. Verfahren nach einem der Ansprüche 5 bis 7, wobei beim Einfahren wenigstens eines einer Absolutspur zugeordneten Sensors in den Maßkörper das Vorliegen eines gültigen PRC-Codes erkannt wird.

**Claims**

1. Length or position measuring system, which has an at least locally substantially linear measuring gauge (200, 205) and at least one sensor (320, 325, 340) that is able to be moved relative to the measuring gauge (200, 205), wherein the measuring gauge (200, 205) comprises an incremental track (200) and at least one absolute track (205), wherein the incremental track (200) and the at least one absolute track (205) of the measuring gauge (200, 205) have poles (210, 215) having a predetermined pole width (220) in the longitudinal direction of the measuring gauge (200, 205), and having transitions between the poles, and wherein the pole width (225) of the at least one absolute track (205) is formed as a multiple of the pole width (220) of the incremental track (200) by a factor $n=2^x$, x = 0, 1, 2, 3, ... and the transitions between the poles of the at least one absolute track (205) coincide in the longitudinal direction of the measuring gauge (200, 205) with transitions between poles of the incremental track (200), **characterised in that** at least one second absolute track (510) is arranged, wherein the pole width (525) of the at least second absolute track (510) is formed as a multiple of the pole width (520) of the first absolute track (505) by a factor $m=2^y$, y = 1, 2, 3, ... with y = x+1, and the transitions between the poles of the at least second absolute track (510) coincide in the longitudinal direction of the measuring gauge (200, 205) with transitions between poles of the incremental track (200).

2. Length or position measuring system according to claim 1, wherein the pole width (525) of the at least second absolute track (510) is formed to be double the pole width (520) of the first absolute track (505).

3. Length or position measuring system according to claim 1 or 2, wherein at least one third absolute track is arranged, wherein the pole width of a certain absolute track is formed as a multiple of, in particular double, the pole width of a respectively preceding absolute track.

4. Length or position measuring system according to one of the preceding claims, comprising sensors which are arranged by a quarter period of a magnetic period of a pole in relation to the distance between their sensitive surfaces.

5. Method for operating a length or position measuring system according to one of the preceding claims, wherein the at least one absolute track (205) having a pole width (225) formed as a multiple of the pole width (220) of the incremental track (200) is coded with a pseudo random code, i.e. PRC, and is evaluated by means of a PRC evaluation, wherein an additional increment, corresponding to the altered pole width (225) of the absolute track (205), is added.

6. Method according to claim 5, wherein the PRC evaluation takes place by means of the following equation (1):

$$f_{Position,ALT} = f\left(ABit_0, ABit_1, ABit_2, \ldots, ABit_{n-1}, ABit_n\right) * Bit\_width, \qquad (1)$$

wherein n is equal to the number of bits, and wherein the position is calculated by means of the following equation (2):

$$f_{Position,NEU} = f\left(2 * f_{Position,ALT} + ABit_n\right) * Bit\_width, \qquad (2)$$

wherein $ABit_n$ can assume a logical value from the value range [0, 1].

7. Method according to claim 5 or 6 with a length or position measuring system formed as an angle measuring system, having x additional absolute tracks, whereby a multiplication by n of the pole width with $n = 2^x$ emerges, and having sensors detecting 0° and 90°, wherein the multiple of a period relative to the actual positioning distance is added to the sensors detecting 0° and 90° according to the following equation (3):

$$P/4 = 2^X * P + P/4 \qquad (3)$$

wherein P = magnetic period and x = 0, 1, 2, 3, ...

8. Method according to one of claims 5 to 7, wherein the presence of a valid PRC code is recognised when inserting at least one sensor allocated to an absolute track into the measuring gauge.

**Revendications**

1. Système de mesure de longueur, respectivement de position, lequel présente au moins localement un corps de mesure (200, 205) sensiblement linéaire, ainsi qu'au moins un capteur (320, 325, 340) se déplaçant relativement par rapport au corps de mesure (200, 205), où le corps de mesure (200, 205) comprend une piste incrémentale (200) et au moins une piste absolue (205), où la piste incrémentale, ainsi qu'au moins une piste absolue (205) du corps de mesure (200, 205) présentent des pôles (210, 215) avec une largeur de pôle (220) prédéfinie dans la direction longitudinale du corps de mesure (200, 205) et des passerelles entre les pôles, et où la largeur de pôle (225) de l'au moins une piste absolue (205) est multipliée par un facteur $n = 2^x$, $x = 0, 1, 2, 3,...$, par rapport à la largeur de pôle (220) de la piste incrémentale (200) et les passerelles entre les pôles de l'au moins une piste absolue (205) tombent au même endroit dans la direction longitudinale du corps de mesure (200, 205) que les passerelles entre les pôles de la piste incrémentale (200),
**caractérisé en ce qu'**au moins une deuxième piste absolue (510) est disposée, où la largeur des pôles (525) de l'au moins une deuxième piste absolue (510) est multipliée par un facteur $m = 2^y$, $y = 0, 1, 2, 3,...$, avec $y = x + 1$, par rapport à la largeur de pôle (520) de la première piste absolue (505) et les passerelles entre les pôles de l'au moins une deuxième piste absolue (510) tombent au même endroit dans la direction longitudinale du corps de mesure (200, 205) que les passerelles entre les pôles de la piste incrémentale (200).

2. Système de mesure de longueur, respectivement de position, selon la revendication 1, dans lequel la largeur de pôle (525) de l'au moins une deuxième piste absolue (510) est doublée par rapport à la largeur de pôle (520) de la première piste absolue (505).

3. Système de mesure de longueur, respectivement de position, selon la revendication 1 ou 2, dans lequel au moins une troisième piste absolue est disposée, où la largeur de pôle d'une piste absolue donnée est multipliée, notamment doublée, par rapport à la largeur de pôle de l'une des pistes absolues précédentes respective.

4. Système de mesure de longueur, respectivement de position, selon l'une des revendications précédentes, comprenant des capteurs, lesquels sont disposés en relation avec une distance entre leurs surfaces sensitives d'un quart de période d'une période magnétique d'un pôle.

5. Procédé permettant de faire fonctionner un système de mesure de longueur, respectivement de position, selon l'une des revendications précédentes, où l'au moins une piste absolue (205) présentant une largeur de pôle (225) multipliée par rapport à la largeur de pôles (220) de la piste incrémentale (200) est codée avec un code pseudo-aléatoire, c'est à dire PRC, et est évaluée au moyen d'une évaluation par PRC, où un élément complémentaire, correspondant à la largeur de pôle (225) modifiée de la piste absolue (205) est ajouté.

6. Procédé selon la revendication 5, dans lequel l'évaluation par PRC a lieu à l'aide de la relation suivante (1) :

$$f_{\text{position,ALT}} = f(ABit_0, Abit_1, Abit_2, \ , ABit_{n-1}, ABit_n) * \text{largeur\_de\_bit}, \qquad (1)$$

où n est égal au nombre de bits, et où la position est calculée à l'aide de la relation suivante (2) :

$$f_{\text{position,NEU}} = f(2*f_{\text{position,ALT}} + ABit_n)*\text{largeur\_de\_bit}, \qquad (2)$$

où $ABit_n$ peut prendre une valeur numérique du domaine des valeurs [0, 1].

7. Procédé selon la revendication 5 ou 6, dans un système de mesure de longueur, respectivement de position, conçu sous la forme d'un système de mesure d'angle, avec x pistes absolues complémentaires, ce par quoi il résulte une multiplication avec n de la largeur de pôle avec $n = 2^x$, et avec des capteurs détectant 0 °, ainsi que 90 °, où pour les capteurs détectant 0 ° et 90 °, le multiple d'une période est ajouté à la distance de positionnement propre selon la relation suivante (3) :

$$P/4 = 2^x * P + P/4 \qquad (3)$$

où P = période magnétique et $x = 0, 1, 2, 3,...$.

8. Procédé selon l'une des revendications 5 à 7, dans lequel, lors de l'entrée sur l'au moins un capteur associé à une piste absolue dans le corps de mesure, la présence d'un code PRC valable est reconnue.

120
↓
P₁
↔

110

| Inkrementell | 1 | 0 | 1 | 0 | 1 | 0 | 1 | — 100 |

| Absolut (PRC) | 1 | 0 | 0 | 1 | 1 | 0 | 1 | — 105 |

P₁
↔

↑
125

115

## Fig. 1 (StdT)

220
↓
P₁
↔

210

| Inkrementell | 1 | 0 | 1 | 0 | 1 | 0 | 1 | | ← 200 |

| Absolut (PRC) | 1 | | 0 | | 1 | | 1 | | ← 205 |

P₂
↔

↑
225

215

## Fig. 2

310

$P_1$

340

300

305

| Inkrementell | 1 | 0 | Ink-Sensor | 0 | 1 |
|---|---|---|---|---|---|
| Absolut (PRC) | 1 | 0 | 0 | 1 | 1 | 0 | 1 |

320

| ABS-Sensoren (0°) |
|---|

325

| ABS-Sensoren (90°) |
|---|

330

335

$P_1$

315

# Fig. 3 (StdT)

420

$P_1$

440

410

450

$Abit_6$

445

400

| Inkrementell | Ink-Sensor | 0 | 1 | 0 | 1 | 0 | 1 | 0 | 1 | 0 | 1 |
|---|---|---|---|---|---|---|---|---|---|---|---|
| Absolut (PRC) | 1 | 0 | 0 | 1 | 1 | 0 | 1 |

405

$Abit_0$   $Abit_1$   $Abit_2$   $Abit_3$   $Abit_4$   $Abit_5$

430

$P_2$

435

415

425

427

| ABS-Sensoren (0°) |
|---|

428

| ABS-Sensoren (90°) |
|---|

# Fig. 4

Fig. 5

Fig.6

**EP 3 021 088 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008053986 A1

- DE 102008053985 A1